# EUROPEAN PATENT SPECIFICATION

(11) **EP 0 946 052 B1**
(45) Date of publication and mention of the grant of the patent: **26.07.2006**
(21) Application number: 98947773.2
(22) Date of filing: 07.10.1998
(51) Int. Cl.: H04N 1/64

(54) **COLOR FACSIMILE AND COLOR FACSIMILE TRANSMISSION METHOD**
FARBFAKSIMILE UND FARBFAKSIMILETRANSMISSIONSVERFAHREN
TELECOPIEUR COULEUR ET PROCEDE DE TRANSMISSION PAR TELECOPIEUR COULEUR

(30) Priority: 14.10.1997 JP 29635097
(43) Date of publication of application: 29.09.1999
(73) Proprietor: Panasonic Communications Co., Ltd., Fukuoka-shi, Fukuoka 812-8531 (JP)
(72) Inventor: KIZAWA, Makoto, Nagano 386-0005 (JP)
(74) Representative: Grünecker, Kinkeldey, Stockmair & Schwanhäusser Anwaltssozietät
(86) International application number: PCT/JP1998/004531
(87) International publication number: WO 1999/020037

(56) References cited:
- EP-A- 0 450 852
- EP-A- 0 680 202
- JP-A- 3 277 068
- JP-A- 4 188 947
- JP-A- 4 188 953
- JP-A- 8 279 913
- JP-A- 9 055 857
- JP-A- 9 116 777
- US-A- 5 485 283

## Description

### Technical Field

The present invention relates to a color facsimile apparatus and color facsimile transmission method capable of transmitting a color original.

### Background Art

Conventionally, the color facsimile apparatus generally provides a color correction, corresponding to a scanning device, to color image data scanned by a color optical system, and multivalue-codes color-corrected image data by JPEG (Joint Photographic Experts Group) system so as to be transmitted. On the other hand, a facsimile apparatus on a receiver side decodes received JPEG data, and provides a color correction and a gamma correction to the decoded JPEG data corresponding to the recording method. Thereafter, the facsimile apparatus on the receiver side provides a correction such as an error diffusion process, etc., to image data, and prints and outputs corrected image data as binary data. In the JPEG system, a discrete cosine transform is used as an algorithm for coding, and the control of coding parameters allows the improvement of a code rate, thus resulting in the deterioration of an image quality.

In order to execute a facsimile transmission of a large amount of color data coded by the JPEG system, it is required that data coding should be executed with an increase in the code rate. In the JPEG system, however, since the image quality is deteriorated when the code rate is increased, there is a limitation in the increase in the code rate. In other words, even if color data is coded by the JPEG system, it takes much time to receive and transmit color data due to a large amount of data, and the memory capacities on both the transmitter and the receiver sides are subjected to pressure. Particularly, when the memory on the receiver side for receiving color data overflows, the content of data will be lost.

In consideration of the above-mentioned problem, the present invention has been made, and an object of the present invention is to provide a color facsimile apparatus in which a JBIG (Joint Bi-level Image Experts Group) coding system is used as a color data processing, thereby reducing an amount of transmission data without causing deterioration of an image quality, and reducing communication time so as to prevent generation of a memory insufficiency.

Document JP 9055857 A discloses a facsimile apparatus comprising both JPEG coding and decoding means and a binary coding and decoding means for coding and decoding image data.

### Disclosure of Invention

In order to solve the above-mentioned problem, a color facsimile apparatus of the present invention comprises two coding sections, i.e., a multivalue-JPEG coding section for coding read color data and a binary JBIG coding section. A facsimile apparatus on a transmitter side determines whether or not a receiver on a transmission destination side is a type of apparatus using a specific recording system. When the receiver on the transmission destination side is the type of apparatus using the specific recording system, read color data is corrected with correction parameters, corresponding to the characteristics of the recording section used in the apparatus on the transmitter side, and binarized, thereafter binarized data is coded by the JBIG coding section, and transmitted. When the receiver on the transmission destination is not the type of apparatus using the specific recording system, read color data is coded by the JPBG coding section in a multivalue state, and transmitted.

### Brief Description of Drawings

FIG. 1 is a schematic block diagram of a color facsimile apparatus according to one embodiment of the present invention;
FIG. 2 is a flowchart showing a direct transmission procedure of the color facsimile apparatus according to one embodiment of the present invention;
FIG. 3 is a flowchart showing a memory transmission process of the color facsimile apparatus according to one embodiment of the present invention;
FIG. 4 is a flowchart showing a mode change procedure of the color facsimile apparatus according to one embodiment of the present invention;
FIG. 5 is a flowchart showing a memory reception procedure of the color facsimile apparatus according to one embodiment of the present invention; and
FIG. 6 is a flowchart showing a procedure when a coding method is changed corresponding to kinds of color original of the color facsimile apparatus according to one embodiment of the present invention.

### Best Mode for Carrying Out the Invention

The following will explain a color facsimile apparatus of one embodiment of the present invention with reference to the drawings.

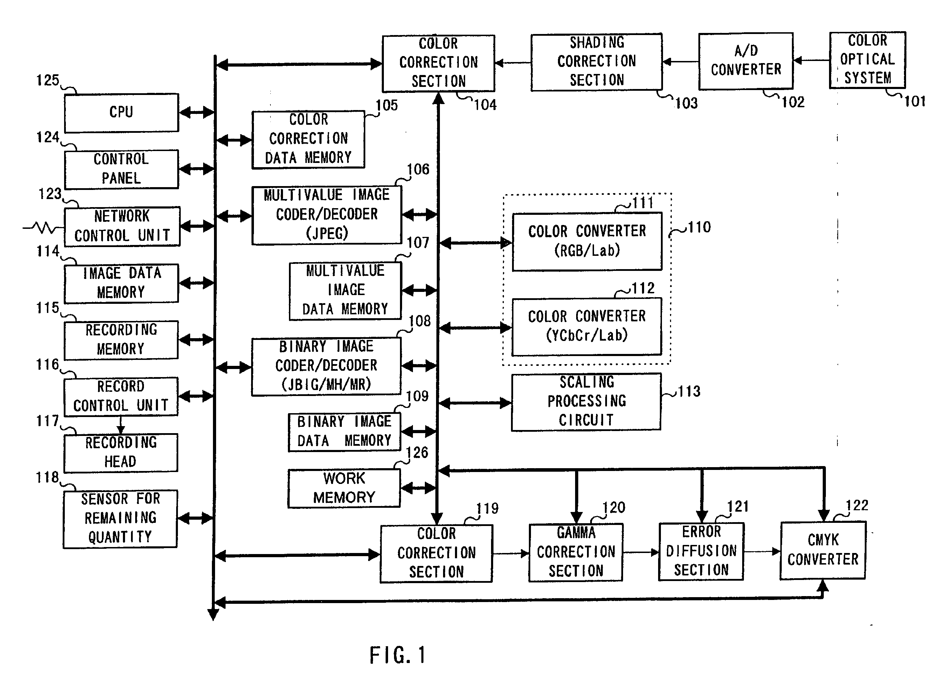

FIG. 1 is a block diagram showing the schematic configuration of the color facsimile apparatus of the present invention. The color facsimile apparatus is schematically configured as follows:

More specifically, a color optical system 101 comprises a color scanner for color-separating a color original into RGB components to scan, and a monochromatic scanner for scanning data with normal black-and-white binary. Each scanned data is subjected to an A/D conversion in an A/D converter 102 and a shading correction in a shading correction section 103, sequentially, thereafter corrected data is input to a color correction section 104.

The color correction section 104 corrects a ratio of scanned RGB data with a different value, depending on whether a scanning device is a CCD sensor or a CIS sensor. The color correction section 104 also corrects a light quantity of a light source varying with a lapse of time. Correction data to be used in these corrections is stored in a color correction data memory 105.

A multivalue image encoder and decoder 106 codes and decodes a multivalue color image by a JPEG or a JBIG system. A multivalue image data memory 107 is a line memory for non-coded data, which is used for coding and decoding the multivalued image.

The multivalue image encoder and decoder 106 JPEG-codes color data scanned from the color optical system 101. Also, the encoder and decoder 106 converts once JPEG-coded data to JBIG-coded data again in accordance with a recording system of a communication destination and the content of transmission data. The specific operation will be described later.

A binary image encoder and decoder 108 JBIG-codes a color binary image. Also, the binary image coder and decoder 108 codes and decodes a black-and-white binary image using a coding and decoding system such as JBIG, MR, MMR, etc. A binary image data memory 109 is a line memory for non-coded data, which is used for coding and decoding the black-and-white binary image.

In the JBIG coding system, two systems, that is, a multivalue coding system and a binary coding system are used. In the present invention, the JPEG system is used as the multivalue coding system and the JBIG system is used as the binary coding system. In the explanation hereinafter, the JBIG system denotes that binarized data is coded by the JBIG system.

A color converter 110 is a section for converting a color space between a scanning system and a recording system. The color converter 110 comprises an RBG/CIELab converter 111 and a YCbCr/CIELab converter 112. The RBG/CIELab converter 111 executes a mutual color space conversion between RGB and CIELab components. The YCbCr/CIELab converter 112 executes a mutual color space conversion between CIELab and YCbCr components.

Since the color facsimile communication is carried out using CIELab data, the RBG/CIELab converter 111 executes the conversion between the RGB color space of the scanning system and the CIELab color space of the communication system, thereby making it possible to provide data compatibility. JPEG data is dealt in the YCbCr color space on the Internet. For this reason, the color facsimile apparatus of the present invention has the YCbCr/CIELab converter 112 so as to process data received via the Internet.

Note that each of CIELab and YCbCr is one of the standard color spaces, which are expressed by lightness and chromaticity, and which are specified by CIE (Commission Internationale de l'Eclairage (International Commission on Illumination)).

A scaling processing circuit 113 is a circuit for executing a conversion processing of image resolution and a scaling processing.

An image memory 114 is a memory for storing scanned data or received data in a state that data is coded. A recording memory 115 is a memory for storing data for recording in a state that coded data is restored. Data stored in the recording memory 115 is recorded by a recording head 117 in accordance with the control of a recording control unit 116. For printing, four color ink of CMYK and color toner are used as recording materials. The remaining quantity of the color recording materials is monitored by a sensor 118 for the remaining quantity.

A color correction section 119 corrects a ratio of CMYK data, depending on whether the recording system is the ink jet recording or the laser recording when color data stored in the recording memory 115 is recorded. After the correction, color data is subjected to a gamma correction in a gamma correction section 120, and an error diffusion processing in an error diffusion section 121, sequentially. The color correction section 119 stores correction parameters corresponding to the color correction section 104 of the scanning system. The stored correction value is calibrated in accordance with the lapse of time of the optical system so as to maintain an appropriate value.

A CMYK converter 122 executes processing for converting data, which has been subjected to the error diffusion processing, to a CMYK color space of the recording system. Since the recording memory 115 stores data, which has been subjected to the color space conversion process by either the RBG/CIELab converter 111 or the YCbCr/CIELab converter 112, the CMYK converter 122 executes only the CIELab/CMYK color conversion.

A network control unit 123 executes a network control for receiving and transmitting data from/to an outer terminal, and a control panel 124 designates various operations of the color facsimile apparatus. A CPU 125 controls the entire apparatus. A proper work memory 126 is a work memory, which is used in the color correction section 119, the gamma correction section 120, the error diffusion section 121, and a CMYK converter 122.

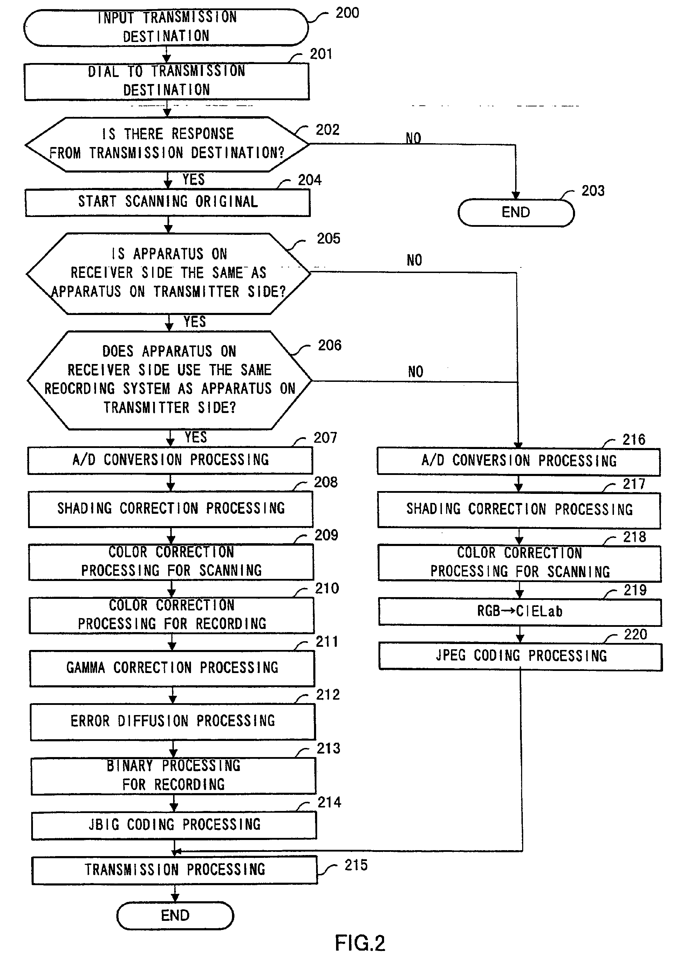

The following will specifically explain each operation of the above-configured color facsimile apparatus with reference to FIG. 2. FIG. 2 is a flowchart showing the processing of a direct transmission in which a general color original is scanned, coded, and transmitted.

In step (hereinafter referred to as ST) 200 to ST 204, an operator loads a transmitting original on a scanner, inputs a transmission destination, and dials the destination. Thereafter, the CPU 125 determines whether or not there is a response from a receiver side. Then, when there is no response, the processing is ended. When there is the response, the original is started to scan (ST204).

In ST205 and ST206, the CPU 125 determines whether or not the apparatus on the receiver side is the same as the apparatus on the transmitter side. When the apparatus is the same as the apparatus on the transmitter side, the CPU 125 further determines whether or not the apparatus on the receiver side uses the same kind of recording system as used in the apparatus on the transmitter side. The determination may be carried out by setting an appropriate flag on an NSF field showing a non-standard procedure of a phase B. When the apparatus on the receiver side uses the same kind of recording system as on the transmitter side, the following processing is further executed.

Specifically, in ST207 to ST209, the scanned image data is subjected to the A/D conversion processing and the shading correction process, sequentially. Image data, which has been subjected to the shading correction processing, is corrected by the color correction section 104. Correction parameters used in the color correction section 104 is obtained by reading color correction data, corresponding to the reading characteristic of the reading device such as CCD, from the color correction data memory 105.

In ST210 to ST213, a color correction is added to image data corresponding to the color space of the recording system. In other words, image data is subjected to the color correction for recording, which is appropriated for the recording system on the receiver side, in the color correction section 119, the gamma correction in the gamma correction section 120, the error diffusion processing in the error diffusion section 121, and the binary processing for recording in the CMYK converter 122, sequentially. Then, image data, which has been subjected to the binary process, is once stored in the binary image data memory 109.

As already explained, when the code rate of image data is increased in the JPEG system, the image quality is deteriorated. Therefore, if the image coding using the JPEG system is executed up to the data quality that can be practical use in the facsimile communication, the image quality is considerably deteriorated in some cases.

In contrast, if scanned color data is binarized and subjected to a JBIG coding processing, color coded data of a suitable size can be obtained. Then, in the apparatus on the receiver side, the coded data is subjected to the color correction, corresponding to the characteristic of the recording device, and the gamma correction, sequentially, and thereafter corrected data is printed and output. As a result, in many cases, the image quality is not deteriorated as compared with the case in which image data is coded with the high code rate by the JPEG system.

In the color correction section and the gamma correction section of the recording system, correction parameters, which are particular to each facsimile apparatus, are set corresponding to the color characteristic of the scanning optical system of the apparatus, so as to obtain a faithful color reproduction in the recording system of the apparatus. Moreover, in order to prevent the correction characteristic from being varied by the change with the lapse of time in the scanning optical system, a calibration processing is sometimes added to the correction parameters of the color correction section of the recording system and the gamma correction section. As a result, the correction parameters are maintained to values suitable for the color characteristics including the scanning system of the apparatus and the recording system. Since the color characteristic of the recorder differs for each apparatus, the data reproducibility is deteriorated if data scanned by the transmitter is color-corrected by the correction parameters of the other receivers.

For the above-mentioned reason, in the color facsimile apparatus of the present invention, the color correction and the gamma correction of the recording system are executed on the transmitter side, thereafter the transmission is executed, and the color correction of the recording system is not executed on the receiver side. According to the above processing, the receiver side can obtain the recorded and output image data whose image quality is substantially the same as image data obtained by copying using both the reading and recording processing systems of the transmitter.

In the following processing other than the above-explained direct transmission process, the color correction processing of the recording system is carried out on the transmitter side in advance for the same reason.

In ST214 and ST215 , binary data for recording, which is stored in the binary image data memory 109, is JBIG-coded by the binary image coder and decoder 108. Then, coded data is transferred to the image data memory 114, and transmitted.

When the facsimile apparatus on the receiver side receives the transmitted color JBIG data, the apparatus outputs received data without executing the color correction processing for the recording system before recording.

The direct transmission, in which scanned transmission data is JBIG-coded and transmitted after executing the color correction processing for recording on the transmitter side, is ended by the above series of processing.

On the other hand, the execution of the direct transmission is not proper for the following case. That is, the apparatus on the receiver side is not the same as the apparatus on the transmitter side. Also, the apparatus on the receiver side is the same as the apparatus on the transmitter side, but does not use the same kind of recording system as used in the apparatus on the transmitter side. In other words, the transmitter side uses an ink jet recording system, while the receiver side uses a laser recording system. In this case, image data must be JPEG-coded and transmitted.

In ST216 to ST220, the JPEG coding is executed. In the case where the apparatus on the receiver side is not the same as the apparatus on the transmitter side, or in the case where the apparatus on the receiver side is the same as the apparatus on the transmitter side, but does not use the same kind of recording system as used in the apparatus on the transmitter side, the scanned image data is subjected to the A/D conversion process and the shading correction process, sequentially. The color correction section 104 reads color-corrected data, corresponding to the scanning characteristic of the scanning device, from the corrected data memory 105, thereby color-correcting image data, which has been subjected to the shading correction. Moreover, in the color converter 111, color-corrected image data is subjected to the color space conversion processing in which RGB data is converted to CIELab data. Thereafter, the JPEG coding processing is carried out. In ST215, the JPEG-coded data is transmitted.

Thus, when the recording system used in the apparatus on the receiver side is different from the recording system used in the apparatus on the transmitter side, or unclear, the facsimile apparatus of the present invention transmits the JPEG-coded image, which can be subjected to the data processing corresponding to the recording system of the apparatus used by the facsimile apparatus on the receiver side which has received data. When it is obvious that the recording system on the receiver side is the same as the recording system used in the apparatus on the transmitter side, the apparatus on the transmitter side executes, in advance, various correction processes for recording, which are originally executed on the receiver side. Thereafter, the JBIG-coded image is transmitted.

When it is clear beforehand that the recording system used in the apparatus on the receiver side is the same as the recording system used in the apparatus on the transmitter side, image data is JBIG-coded and transmitted after the facsimile apparatus on the transmitter side executes the color correction processing for recording. On the other hand, the apparatus on the receiver side outputs image data without executing the color correction for recording. This results in a good received image having no deterioration, and a considerable large reduction of the amount of data as compared with the transmission of the JPEG image. As a result, the communication speed to be improved, and the overflow of the memory can be prevented in the facsimile apparatus of both the transmitter side and the receiver side. Moreover, the facsimile apparatus on the receiver side can reduce the processing time including the data reception to the data printing and outputting because the data correction processing is not executed.

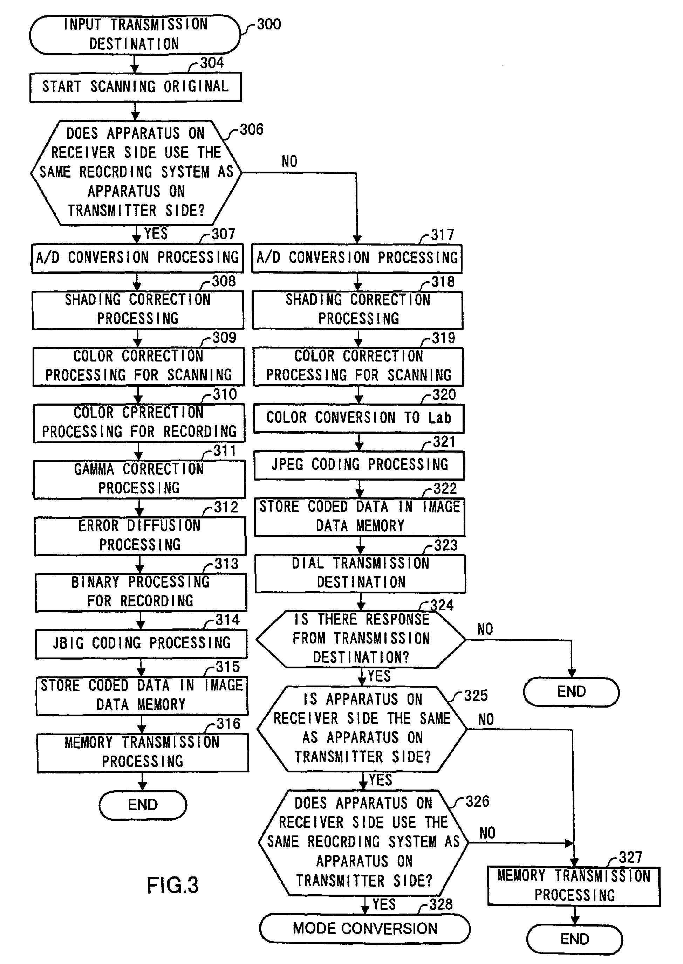

Next, the following will explain the operations when the memory transmission is executed in the color facsimile apparatus of the present invention with reference to the flowchart of FIG.3. Though the basic processing is the same as the processing shown in the flowchart of FIG. 2, the processing of FIG. 3 is different from that of FIG. 2 in the point that scanned data is once stored in the memory and transmitted.

In ST300 to ST314, the operator loads the transmitting original on the scanner, inputs the transmission destination, and dials the transmission destination. Thereafter, the CPU 125 determines whether or not there is a response from the receiver side. When there is no response, the process is ended. When there is the response, the original is started to read.

When the apparatus on the receiver side is the apparatus using the same kind of recording system as used in the apparatus on the transmitter side, scanned image data is subjected to the A/D conversion process and the shading correction process, sequentially. Then, the color correction section 104 executes the color correction processing corresponding to the scanning characteristic of the scanning device.

The determination whether or not the recording system used in the apparatus on the receiver side is the same as used in the apparatus on the transmitter side in ST306 is carried out as follows. Specifically, whether or not the recording system used in the apparatus on the receiver side is the same as used in the apparatus on the transmitter side is determined from the past communication result. The determination result is stored with the telephone number of the apparatus on the receiver side. Then, the determination in ST306 is executed with reference to the telephone number stored when the telephone number of the sender is input.

Furthermore, image data is subjected to the color correction for recording, which is appropriate for the recording system used in the apparatus on the receiver side, in the color correction section 119, the gamma correction in the gamma correction section 120, the error diffusion processing in the error diffusion section 121, sequentially. Then, the binary processing for recording is executed in the CMYK converter 122. Thereafter, binary data is once stored in the binary image data memory 109. Then, binary data is JBIG-coded by the binary image encoder and decoder 108.

In ST315 and ST316, after JBIG-coded color data is once stored in the image data memory 115, JBIG-coded color data is transmitted. A series of processing is the same as the case of the direct transmission.

As a result of the determination of the recording system in ST306, when the recording system used in the facsimile apparatus on the receiver side is not the same as used in the apparatus on the transmitter side, the following processes are executed.

In ST317 to ST319, the scanned image data is subjected to the A/D conversion processing and the shading correction processing, sequentially. Then, the color correction section 104 executes the color correction processing corresponding to the scanning characteristic of the scanning device.

In ST320 to ST321, in the color converter 111, image data is subjected to the conversion process of the color space in which RGB data is converted to CIELab data, and then the JPEG coding process is carried out.

In ST322 to ST323, JPEG-coded image data is stored in the image data memory 114, and then a calling to the transmitter side is carried out.

In ST324 to ST326, the CPU 125 detects a response signal from the receiver side after a communication link is established, and determines whether or not the apparatus on the receiver side is the same as the apparatus on the transmitter side. When the apparatus on the receiver side is the same as the apparatus on the transmitter side, the CPU 125 further determines whether or not the apparatus on the receiver side uses the same kind of recording system as used in the apparatus on the transmitter side. The determination method is the same as the case of the direct transmission.

In ST327, when the apparatus on the receiver side is not the same as the apparatus on the transmitter and when the apparatus on the receiver side does not use the same kind of recording system as used in the apparatus on the transmitter side, the JPEG-coded image is directly transmitted from the memory and the transmission operation is ended. Transmitted data is received by the facsimile apparatus on the receiver side, received data is restored. Then, restored data is subjected to the color correction processing appropriate for the recording system used in the apparatus on the receiver side, and color-corrected data is subjected to the gamma correction processing, thereafter image data is recorded and output.

On the other hand, when the facsimile apparatus on the receiver side is the same as the apparatus on the transmitter side, and uses the same kind of recording system as used in the apparatus on the transmitter side, a mode change process is carried out in ST328.

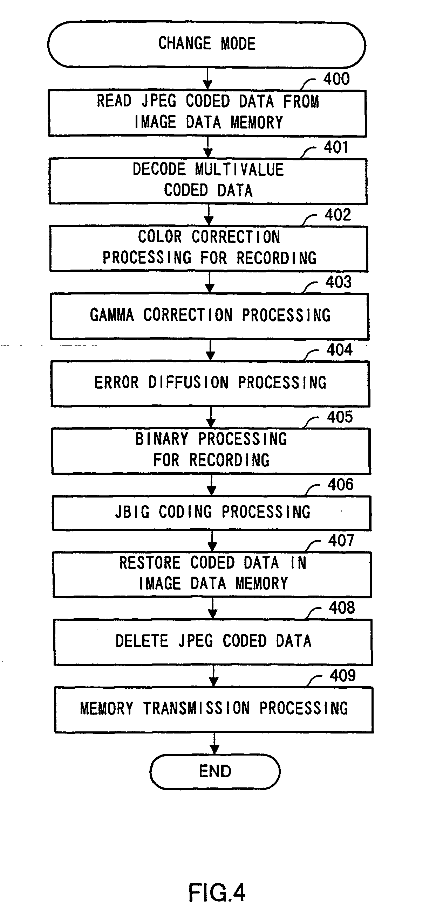

The mode change process will be explained with reference to the flowchart of FIG. 4.

In ST400 and ST401, JPEG-coded data is read from the image data memory 114, and is once decoded.

In ST402 to ST407, decoded data is subjected to the color correction processing for recording, the gamma correction processing, the error diffusion processing, and the binary processing for recording, sequentially. Thereafter, binary image data is JBIG-coded and stored in the image data memory 114 again.

In ST408 and ST409, JPEG-coded data, which has become unnecessary after storing JBIG-coded data, is deleted from the image data memory 114. Thereafter, the transmission of JBIG-coded data is carried out.

Thus , when it can not be determined beforehand that the recording system used in the apparatus on the receiver side is the same as the apparatus on the transmitter side, the memory transmission process is executed on the precondition that JPEG-coded data is transmitted as an immediate measure. Thereafter, when it is found on the communication procedure that the recording system used in the facsimile apparatus on the receiver side is the same as the apparatus on the transmitter side, image data stored in the memory is coded again by the JBIG system. Then, JBIG-coded image data is subjected the color correction processing corresponding to the recording section of the apparatus on the receiver side, thereafter image data is transmitted. As a result, facsimile communication time between the same apparatus can be reduced at its maximum without increasing transmission time in which JPEG-coded data should be originally transmitted to the destination.

In the other method, it is of course possible to process for the reduction of the communication speed between the same apparatus by priority. In many cases, however, the communication with the other apparatus or the communication with the same apparatus using the different recording system occupies the actual facsimile communication. Therefore, the processing of the present invention is extremely useful.

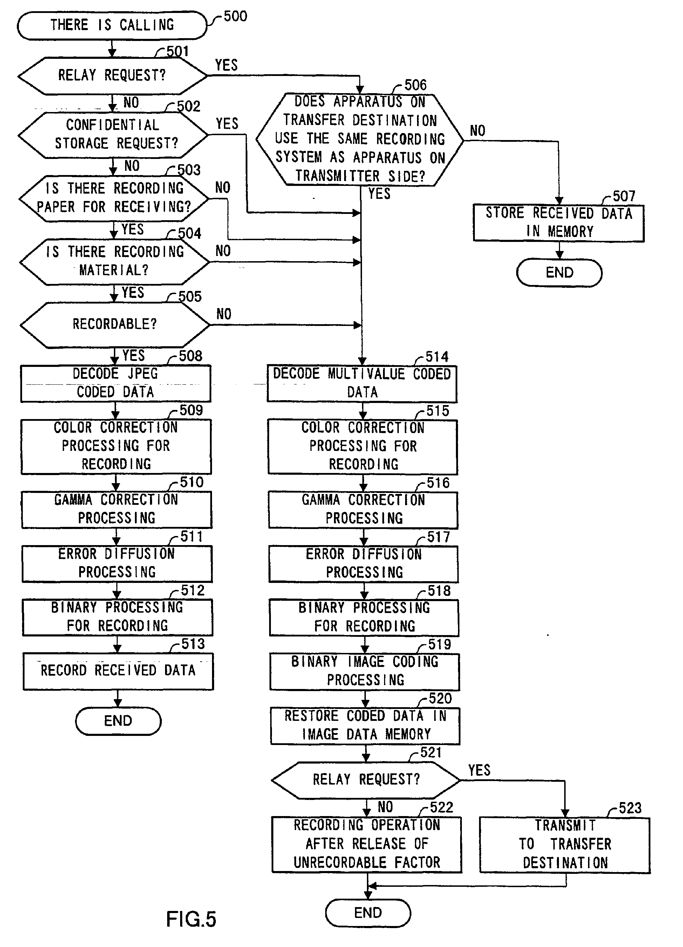

Next, the following will explaing the operations when the memory reception such as a delayed delivery or a relay transfer is executed in the color facsimile apparatus of the present invention with reference to the flowchart of FIG.5.

In ST500 to ST505 , the CPU 125 detects a calling and checks whether the calling is a relay request or a confidential storage request. Also, the CPU 125 confirms on the communication procedure whether or not there are a sheet of recording paper for receiving, recording material, and the other unrecordable factors, sequentially.

In ST506, when it is found that the calling is the relay request, the CPU 125 confirms whether or not the facsimile apparatus on a multistation destination (receiver) side uses the same kind of recording system as used in the apparatus on the transmitter side. When the recording system used in the apparatus on the receiver side is different from the recording system used in the apparatus on the transmitter side, data received in ST507 is once stored in the memory, and the process is ended. Note that the relay request in this case may be either of the relay transfer and the relay multistation.

In ST508 to ST513, when the determination results are NO in both ST501 and ST502 and when the determination results are all YES in ST503 to ST505, that is, the calling is the normal memory reception and is in the recordable state, JPEG-coded data is decoded. The decoded data is subjected to the color correction processing, the gamma correction, the -error diffusion processing, and the binary processing for recording, sequentially, and is recorded and output.

When the determination result in any of ST501 to ST505 does not satisfy the above conditions, that is, the calling requests the relay transfer but both apparatus on the transfer destination side and the transmitter side use the same recording system, the confidential communication is designated, and the recording and outputting can not be carried out due to some troubles, the following processing is executed.

In ST514 to ST520, JPEG-coded data stored in the image data memory 114 is once decoded. The decoded data is subjected to the color correction processing for recording, the gamma correction, the error diffusion processing, and the binary processing for recording, sequentially. Thereafter, data is coded by the JBIG system, and stored in the image data memory 114 again.

In ST521 to ST523, it is determined whether or not JBIG-coded data is relay request data. When the JBIG-coded data is not relay request data, data is stored in the image data memory 114 until the recording can be executed. Conversely, when the JBIG-coded data is relay request data, the JBIG-coded data is transferred to the transfer destination, and a series of processes is ended.

Thus, when JPEG-coded data is received from the transmitter whose recording system is different from the recording system of the receiver, or when the printing and outputting can not be executed due to abnormality of the recorder, data is coded by the JBIG system again and stored in the memory. As a result, the data size can be reduced, and the effective use of the memory can be improved.

When the receiver on the transfer destination side uses the same recording system as used in the relay side, the facsimile apparatus on the relay side transfers data after executing various kinds of correction processing in advance. Thereby, the image quality can be prevented from being deteriorated, the transmission time can be reduced, the data processing speed of the apparatus on the transfer destination side can be increased, and the effective use of the memory can be improved.

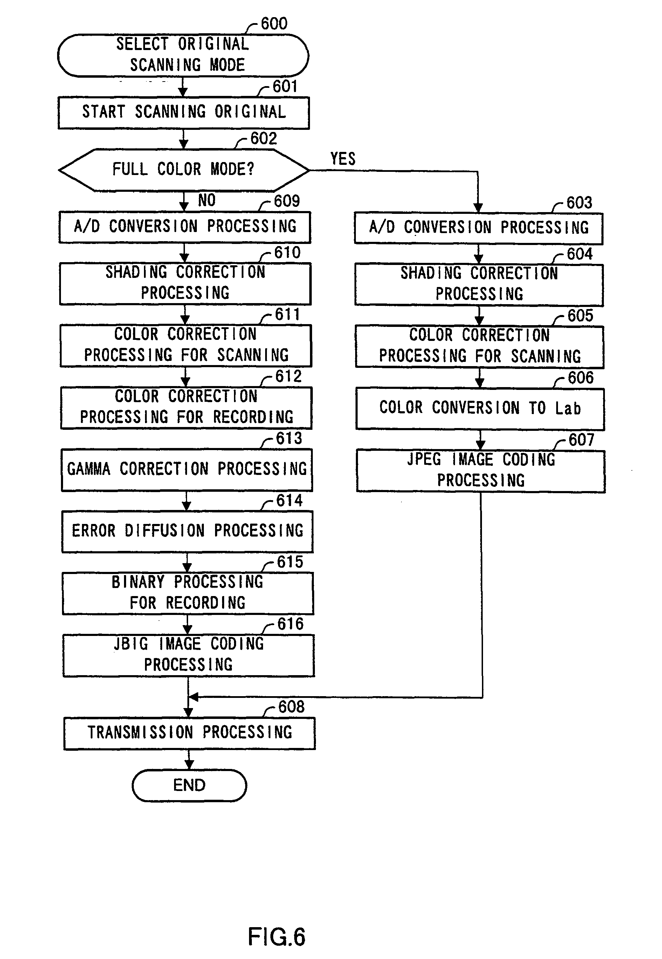

Next, the following will explain the operations when a coding method is changed, corresponding to the kind of color original to be scanned in the color facsimile apparatus of the present invention with reference to the flowchart of FIG.6.

In ST600 to ST602, the original is started to scan after an original scanning mode is selected, and it is determined whether or not the original is in a full color mode. When the original is in the full color mode, the processing from ST603 is executed. When the original is not in the full color mode, the processing from ST608 is executed. The case in which the original is not in the full color mode is referred as a business mode such as two colors, eight colors, or a plurality of colors. Note that this determination processing may be executed by a mode, which the operator designates using the control panel, or inspecting a color distribution of process data of the designated color correction section 104.

As described later, for executing an automatic determination, the determination processing is carried out as follows:

For example, in the case of eight colors, intermediate data does not originally exist in output values of scanned R, G, B. Instead, 0 or the most significant value is shown, and eight colors are expressed by combining these values. Therefore, when the output value of each color is 0 or the maximum value, the scanned original has eight colors. When the output value of each color is the intermediate value between 0 and the maximum value, the scanned original may be determined as a full color.

In ST603 to ST608, the scanned image data is subjected to the A/D conversion and the shading correction, sequentially. Thereafter, the color correction processing is executed in the color correction section 104. In the execution of the color correction section, the color correction section 104 reads color correction data, corresponding to the scanning characteristic of the scanning device, from the color correction data memory 105. Then, in the color converter 111, color-corrected data is subjected to the color space conversion processing in which RGB data is converted to CIELab data, and coding by JPEG-coding. Then the coded data is transmitted.

In ST609 to ST616, the scanned data obtained from the color optical system 101 is subjected to the A/D conversion and the shading correction, sequentially. Thereafter, the color correction processing, corresponding to the scanning characteristic of the scanning device, is executed in the color correction section 104. Moreover, image data is subjected to the color correction for recording, which is appropriate for the recording system used in the apparatus on the receiver side, in the color correction section 119, and the gamma correction in the gamma correction section 120, the error diffusion processing in the error diffusion section 121, sequentially. Then, the binary processing for recording is executed in the CMYK converter 122. Thereafter, binary image data is once stored in the binary image data memory 109. The binary data is JBIG-coded in the binary image encoder and decoder 108, and transmitted.

Thus, even in the case in which the recording system used in the apparatus on the receiver side is different from the recording system used in the apparatus on the transmitter side, the deterioration of the image quality on the receiver side does not much matter unless the original to be transmitted is the full color. For this reason, image data was JBIG-coded and transmitted. Conversely, when the original to be transmitted is the full color, image data was JPEG-coded and transmitted. Thereby, the amount of data can be reduced corresponding to the kinds of data, and the data processing time can be improved at its maximum. Though the transmission using JBIG is inferior to the transmission using JPEG in the image quality, it cannot be considered that the transmitter side gives the highest priority to the image quality when the original is not the full color.

### Industrial Applicability

The color facsimile apparatus of the present invention is used in the facsimile apparatus capable of transmitting color original documents. In particular, the color facsimile apparatus of the present invention is effective in the case where the facsimile apparatus at a receiver side uses the same recording system as used in a facsimile apparatus on a transmitter side, and is enable to transmit color original documents while reducing communication time and preventing generation of a memory insufficiency.

## Claims

1. A colour facsimile apparatus, comprising:
scanning means (101) for scanning colour original to obtain multivalue colour image data;
**characterized by**
determining means (125) adapted to determine whether or not a destination apparatus uses a recoding system that is the same as a recording system of the colour facsimile apparatus;
JPEG coding means (106) adapted to code the multivalue colour image data obtained by the scanning means (101) in JPEG to obtain JPEG image data, when the determining means (125) determines that the destination apparatus does not use the same recording system;
transmitting means (123) adapted to transmit the JPEG image data obtained by the JPEG coding means (106) to the destination apparatus;
correcting means (119, 120) adapted to correct the multivalue colour image data obtained by the scanning means (101), using correction parameters corresponding to the characteristics of the recording system of the colour facsimile apparatus on the transmitting side, when the determining means (125) determines that the destination apparatus uses the same recording system;
binary processing means (122) adapted to binarize the multivalue colour image data corrected by the correcting means (119, 120) to obtain binarized colour image data; and
JBIG coding means (108) adapted to code the binarized colour image data obtained by the binary processing means (122) in JBIG to obtain JBIG image data;
wherein the transmitting means (123) being further adapted to transmit the JBIG image data obtained by the JBIG coding means (108) to the destination apparatus.

2. The colour facsimile apparatus according to claim 1, wherein the determining means (125) is adapted to determine whether or not the destination apparatus uses the same recording system by checking a signal from the destination terminal.

3. The colour facsimile apparatus according to claim 1, wherein the correcting means (119, 120) is adapted to perform colour correction and gamma correction.

4. A colour facsimile transmission method by a colour facsimile transmission apparatus, comprising the steps of:
scanning a colour original to obtain multivalue colour image data;
**characterized by**
determining whether or not a destination apparatus uses a recording system that is the same as a recording system of the colour facsimile apparatus;
coding the obtained multivalue colour image data in JPEG to obtain JPEG image data, when the destination apparatus is determined not to use the same recording system;
transmitting the JPEG image data obtained to the destination apparatus;
correcting the multivalue colour image data, using correction parameters corresponding to the characteristics of the recording system of the colour facsimile apparatus on the transmitting side, when the destination apparatus is determined to use the same recoding system;
binarizing the corrected multivalue colour image data to obtain binarized colour image data;
coding the binarized colour image data in JBIG to obtain JBIG image data and;
transmitting the obtained JBIG image data to the destination apparatus.

## Patentansprüche

1. Farb-Faxvorrichtung, die umfasst:
eine Scan-Einrichtung (101) zum Scannen eines Farb-Originals, um mehrwertige Farbbilddaten zu gewinnen;
**gekennzeichnet durch**:
eine Feststelleinrichtung (125), die so eingerichtet ist, dass sie feststellt, ob eine Zielvorrichtung ein Aufzeichnungssystem, das das gleiche ist wie ein Aufzeichnungssystem der Farb-Faxvorrichtung, verwendet oder nicht;
eine JPEG-Codiereinrichtung (106), die so eingerichtet ist, dass sie die mit der Scan-Einrichtung (101) gewonnenen mehrwertigen Farbbilddaten in JPEG codiert, um JPEG-Bilddaten zu gewinnen, wenn die Feststelleinrichtung (125) feststellt, dass die Zielvorrichtung nicht das gleiche Aufzeichnungssystem verwendet;
eine Sendeeinrichtung (123), die so eingerichtet ist, dass sie die **durch** die JPEG-Codiereinrichtung (106) gewonnenen JPEG-Bilddaten zu der Zielvorrichtung sendet;
eine Korrigiereinrichtung (119, 120), die so eingerichtet ist, dass sie die **durch** die Scan-Einrichtung (101) gewonnenen mehrwertigen Farbbilddaten unter Verwendung von Korrekturparametern korrigiert, die den Eigenschaften des Aufzeichnungssystems der Farb-Faxvorrichtung an der sendenden Seite entsprechen, wenn die Feststelleinrichtung (125) feststellt, dass die Zielvorrichtung das gleiche Aufzeichnungssystem verwendet;
eine Binär-Verarbeitungseinrichtung (122), die so eingerichtet ist, dass sie die durch die Korrigiereinrichtung (119, 120) korrigierten mehrwertigen Farbbilddaten binarisiert, um binarisierte Farbbilddaten zu gewinnen; und
eine JBIG-Codiereinrichtung (108), die so eingerichtet ist, dass sie die **durch** die Binär-Verarbeitungseinrichtung (122) binarisierte Farbbilddaten in JBIG codiert, um JBIG-Bilddaten zu gewinnen;
wobei die Sendeeinrichtung (123) des Weiteren so eingerichtet ist, dass sie die durch die JBIG-Codiereinrichtung (108) gewonnenen JBIG-Bilddaten zu der Zielvorrichtung sendet.

2. Farb-Faxvorrichtung nach Anspruch 1, wobei die Feststelleinrichtung (125) so eingerichtet ist, dass sie feststellt, ob die Zielvorrichtung das gleiche Aufzeichnungssystem verwendet, indem sie ein Signal von dem Ziel-Endgerät prüft.

3. Farb-Faxvorrichtung nach Anspruch 1, wobei die Korrigiereinrichtung (119, 120) so eingerichtet ist, dass sie Farbkorrektur und Gammakorrektur durchführt.

4. Farb-Faxübertragungsverfahren mit einer Farb-Faxübertragungsvorrichtung, das die folgenden Schritte umfasst:
Scannen eines Farb-Originals, um mehrwertige Farbbilddaten zu gewinnen;
**gekennzeichnet durch**:
Feststellen, ob eine Zielvorrichtung ein Aufzeichnungssystem verwendet, das das gleiche ist wie ein Aufzeichnungssystem der Farb-Faxvorrichtung;
Codieren der gewonnenen mehrwertigen Farbbilddaten in JPEG, um JPEG-Bilddaten zu gewinnen, wenn festgestellt wird, dass die Zielvorrichtung nicht das gleiche Aufzeichnungssystem verwendet;
Senden der gewonnenen JPEG-Bilddaten zu der Zielvorrichtung;
Korrigieren der mehrwertigen Farbbilddaten unter Verwendung von Korrekturparametern, die den Eigenschaften des Aufzeichnungssystems der Farb-Faxvorrichtung an der sendenden Seite entsprechen, wenn festgestellt wird, dass die Zielvorrichtung das gleiche Aufzeichnungssystem verwendet;
Binarisieren des korrigierten mehrwertigen Farbbildes, um binarisierte Farbbilddaten zu gewinnen;
Codieren der binarisierten Farbbilddaten in JBIG, um JBIG-Bilddaten zu gewinnen, und
Senden der gewonnenen JBIG-Bilddaten zu der Zielvorrichtung.

## Revendications

1. Télécopieur couleur, comprenant:
un moyen de balayage (101) pour balayer un original couleur pour obtenir des données d'image couleur à plusieurs valeurs;
**caractérisé par**
un moyen de détermination (125) adapté pour déterminer si un appareil de destination utilise ou non un système d'enregistrement qui est le même qu'un système d'enregistrement du télécopieur couleur;
un moyen de codage JPEG (106) adapté pour coder les données d'image couleur à plusieurs valeurs obtenues par le moyen de balayage (101) en JPEG pour obtenir des données d'image JPEG, lorsque le moyen de détermination (125) détermine que l'appareil de destination n'utilise pas le même système d'enregistrement;
un moyen de transmission (123) adapté pour transmettre les données d'image JPEG obtenues par le moyen de codage JPEG (106) à l'appareil de destination;
un moyen de correction (119, 120) adapté pour corriger les données d'image couleur à plusieurs valeurs obtenues par le moyen de balayage (101), en utilisant des paramètres de correction correspondant aux caractéristiques du système d'enregistrement du télécopieur couleur au niveau de la transmission, lorsque le moyen de détermination (125) détermine que l'appareil de destination utilise le même système d'enregistrement;
un moyen de traitement binaire (122) adapté pour rendre binaires les données d'image couleur à plusieurs valeurs corrigées par le moyen de correction (119, 120) pour obtenir des données d'image couleur binaires; et
un moyen de codage JBIG (108) adapté pour coder les données d'image couleur binaires obtenues par le moyen de traitement binaire (122) en JBIG pour obtenir des données d'image JBIG;
où le moyen de transmission (123) étant par ailleurs adapté pour transmettre les données d'image JBIG obtenues par le moyen de codage JBIG (108) à l'appareil de destination.

2. Télécopieur couleur selon la revendication 1, où le moyen de détermination (125) est adapté pour déterminer si l'appareil de destination utilise ou non le même système d'enregistrement en contrôlant un signal depuis le terminal de destination

3. Télécopieur couleur selon la revendication 1, où le moyen de correction (119, 120) est adapté pour effectuer de la correction de couleur et de la correction gamma.

4. Procédé de transmission de télécopie couleur par un télécopieur couleur, comprenant les étapes de:
balayer un original couleur pour obtenir des données d'image couleur à plusieurs valeurs;
**caractérisé par**
déterminer si l'appareil de destination utilise ou non un système d'enregistrement qui est le même qu'un système d'enregistrement du télécopieur couleur;
coder les données d'image couleur à plusieurs valeurs obtenues en JPEG pour obtenir des données d'image JPEG, lorsqu'il est déterminé que l'appareil de destination n'utilise pas le même système d'enregistrement;
transmettre les données d'image JPEG obtenues à l'appareil de destination;
corriger les données d'image couleur à plusieurs valeurs, en utilisant des paramètres de correction correspondant aux caractéristiques du système d'enregistrement du télécopieur couleur au niveau de la transmission, lorsqu'il est déterminé que l'appareil de destination utilise le même système d'enregistrement;
rendre binaires les données d'image couleur à plusieurs valeurs corrigées pour obtenir des données d'image couleur binaires;
coder les données d'image couleur binaires en JBIG pour obtenir des données d'image JBIG et;
transmettre les données d'image JBIG obtenues à l'appareil de destination.
